# EUROPÄISCHE PATENTSCHRIFT

(11) **EP 0 442 417 B1**
(45) Veröffentlichungstag und Bekanntmachung des Hinweises auf die Patenterteilung: **29.11.1995**
(21) Anmeldenummer: 91101870.3
(22) Anmeldetag: 11.02.1991
(51) Int. Cl.: F16F 1/06, H01B 7/22, H02G 11/00, H01B 7/06

(54) **Kabel mit äusserer schützender Metall-Spiralfeder**
Cable with external protective metallic coil spring
Câble avec ressort hélicoidal métallique externe comme protection

(30) Priorität: 14.02.1990 DE 9001735 U
(43) Veröffentlichungstag der Anmeldung: 21.08.1991
(73) Patentinhaber: W.L. Gore & Associates GmbH, 85636 Putzbrunn (DE)
(72) Erfinder: Braungart, Heinz, D-8541 Röttenbach (DE); Diana, Piero, I-20093 Cologno Monzese (Milano) (IT)
(74) Vertreter: Klunker . Schmitt-Nilson . Hirsch

(56) Entgegenhaltungen:
- EP-A- 0 330 357
- FR-A- 809 835
- GB-A- 1 311 118
- GB-A- 2 069 445
- US-A- 4 988 833

## Beschreibung

Die Erfindung schafft ein Kabel mit äußerer schützender Spiralfeder.

Ein mittels einer Spiralfeder geschütztes Kabel ist aus der GB-A-2 069 445 bekannt. Dabei überbrücken das Kabel und die Spiralfeder einen Abstand zwischen einem Türrahmen und einer relativ zum Türrahmen verschwenkbaren Tür. Das Kabel ist ein Linearkabel, das durch den Innenraum der Spiralfeder hindurchgeführt ist. Wenn die Tür geöffnet ist, ist die Spiralfeder gelängt, was zu einem Öffnen der Spiralfeder führt, derart, daß die Spiralfeder-Windungen nicht mehr dicht aneinander liegen sondern Spaltöffnungen dazwischen entstehen. Wegen der Dehnung der Spiralfeder bei geöffneter Tür muß das darin befindliche Kabel eine entsprechende Überlänge haben.

Bei derzeit üblichen Kabeln besteht die äußere Umhüllung aus einem Kunststoffmantel, der die Aufgaben hat, die einzelnen leitenden Adern a) zusammenzuhalten, sowie sie b) nach außen hinreichend zu isolieren und c) vor Verletzungen zu schützen. Diese letzte Aufgabe können die isolierenden Kunststoffmäntel naturgemäß nur in begrenztem Umfang erfüllen, denn das Material ist relativ weich und daher durch scharfe oder spitze Gegenstände leicht verletzbar. Zudem erweicht bzw. schmilzt es bei hohen Temperaturen, so daß heiße Gegenstände regelrecht in den Kunststoffmantel hineinschmelzen können.

Kommt ein solches Kabel bei Fertigungsprozessen wie Drehen, Fräsen, Entgraten oder sonstigen spanabhebenden Behandlungen zum Einsatz, so ist es nach kurzer Zeit von Spänen regelrecht gespickt. Denn bei diesen Verfahren werden 900-1000°C heiße Metall-Späne und -spänchen geschoßartig vom Werkstück weggeschleudert und dringen in den Kabelmantel ein, was zu Störungen in der Signalübertragung und sogar zu Kurzschlüssen führt, wenn die Späne bis zu den elektrischen Leitern vordringen.

Das Kabel bedarf daher eines ausreichend harten, temperaturbeständigen Schutzüberzugs, der jedoch insoweit unvorteilhaft erscheint, als er das Kabel in seiner Flexibilität zwangsläufig stark einschränken würde.

Besonders gravierend wirken sich Einbußen in der Flexibilität bei Spiralkabeln aus. Spiralkabel stehen unter elastischer Vorspannung. Sie lassen sich gleich einer Spiralfeder dehnen und nehmen, wenn keine dehnende Zugkraft mehr auf sie ausgeübt wird, aufgrund ihrer elastischen Vorspannung wieder ihre Ausgangslänge ein (Memory-Effekt). Daher sind sie besonders vorteilhaft in allen Fällen, in denen ein Kabel wechselnde Distanzen überbrücken soll, beispielsweise bei der Stromversorgung und Signalübermittlung an computergesteuerte Fertigungsköpfe.

Es besteht daher ein Bedarf an Kabeln, die gegen äußere Einwirkungen ausreichend geschützt sind, ohne durch diesen Schutz nennenswert an Flexibilität zu verlieren.

Diesen Schutz könnte die aus der GB-A-2 069 445 bekannte Spiralfeder nicht bieten, selbst wenn sie aus Metall wäre, da sich die feder bei einer Zugbeanspruchung in Längsrichtung öffnet und auf das Kabel zufliegende Partikel nicht mehr sicher vom Kabel abhalten kann.

Aufgabe der Erfindung ist es, ein Spiralkabel anzugegeben, das schädigenden äußeren Einwirkungen weitgehend unbeschadet standhält und gegebenenfalls gleichzeitig sehr gute Flexibilitätseigenschaften aufweist, wobei dessen elastische Vorspannung nicht nennenswert beeinträchtigt werdend soll.

Eine Lösung der Aufgabe ist im Anspruch 1 angegeben und kann den Unteransprüchen gemäß vorteilhaft weitergebildet werden.

Erfindungsgemäß werden Spiralkabel, die im Betrieb mechanischer oder thermischer Beanspruchung ausgesetzt sind, beispielsweise durch Funkenflug oder Späne, mit einer schützenden äußeren Metall-Spiralfeder umgeben, deren Windungen eng aneinanderliegen. Diese Spiralfeder wird auf das Kabel aufgeschoben, während sich das Kabel noch im linearen Zustand befindet, und wird bei einer bevorzugten Ausführungsform zum Schutz gegen Verschiebungen an ihren jeweiligen Endbereichen mittels eines Schrumpfschlauches am Mantelmaterial des Kabels befestigt. Anschließend wird das nunmehr durch die Metallspirale geschützte Kabel durch Erhitzen in Spiralform gebracht. Damit das Kabel auch nach dem Abkühlen seine Spiralform beibehält, muß das Kabel einen sogenannten "Memory-Effekt" besitzen, d.h., nach dem Abkühlen erhält man ein elastisches Spiralkabel, das wegen seiner elastischen Vorspannung nach Dehnungsprozessen stets wieder in seine Ausgangsform zurückkehrt. Bei Kabeln mit Schutzspirale muß der Memory-Effekt stärker sein als ohne Schutz. Grundsätzlich gilt, je mehr Metall, also leitende Adern und Schutzüberzug ein Kabel enthält, umso stärker ausgeprägt muß der Memory-Effekt sein, um die geforderte elastische Vorspannung zu erzielen.

Es bieten sich mehrere Möglichkeiten zur Erzeugung der elastischen Vorspannung. Zum einen kann der Memory-Effekt durch das Mantelmaterial ausgeübt werden, indem man ihm eine geeignete Substanz zugibt oder diese, die elastische Vorspannung bewirkende Substanz als Füller in das Mantelmaterial einlegt oder mit Füllersubstanz versehenes oder damit aufgebautes Material aufbringt. Zum anderen können die leitenden Adern selbst oder ihre Primärisolation einen Memory-Effekt besitzen. Auch beliebige Kombinationen der genannten Alternativen miteinander sind möglich und besonders vorteilhaft, wenn starke elastische Vorspannungen benötigt werden. Als Kunststoffe mit Memory-Effekt kommen vor allem Polyamide, zum Beispiel Nylon in Betracht. Sie können als Reinsubstanzen verwendet werden, was besonders bei Füllern vorteilhaft ist, oder auch anderen isolierenden Kunststoffen beigegeben werden. Wenn die Adern selbst einen Memory-Effekt besitzen sollen, so empfiehlt es sich, als Leiter-Material Berrylium oder Berrylium-Legierungen zu verwenden.

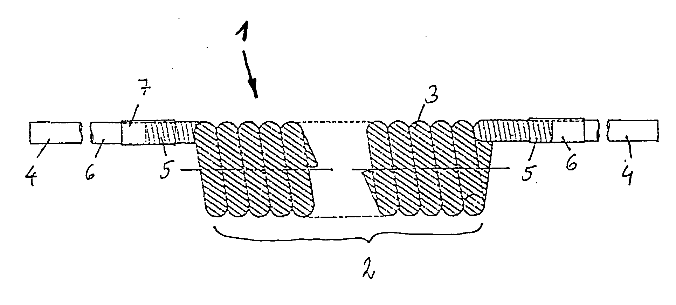

Im folgenden wird ein Ausführungsbeispiel der Erfindung anhand einer Zeichnung mit einer einzigen Figur näher erläutert. Die Zeichnung zeigt ein Kabel 1, das in seinem mittleren Bereich 2 spiralförmig ausgebildet ist. Dieser Bereich ist von einer metallischen Spiralfeder 3 umgeben, die sich auch noch über einen Teil des linearen Kabelbereichs 4 erstreckt. Die jeweiligen Endbereiche 5 der Spiralfeder und die daran jeweils angrenzenden Bereiche 6 des unbedeckten Kabels sind mit einem aufgeschrumpften Schlauchabschnitt 7 verschiebungssicher verbunden.

Kabel, die erfindungsgemäß gegen verletzende äußere Einwirkungen geschützt sind, können vorteilhaft angewendet werden bei Maschinen und Geräten aller Art, bei denen mit wegfliegenden Spänen oder Funken zu rechnen ist, beispielsweise bei Schweißmaschinen.

## Patentansprüche

1. Kabel, das von einer Spiralfeder (3) mit eng aneinanderliegenden Windungen umgeben ist,
**dadurch gekennzeichnet**,
daß das Kabel (1) ein Spiralkabel ist und daß die Spiralfeder eine Metall-Spiralfeder (3) ist, die auf das im linearen Zustand befindliche Kabel (1) aufgebracht ist und im Spiralzustand des Spiralkabels dessen Spiralwindungen einzeln umgibt.

2. Kabel mit einer Spiralfeder nach Anspruch 1,
dadurch gekennzeichnet,
daß die Endbereiche (5) der Metall-Spiralfeder (3) mittels eines Schrumpfschlauches (7) an den jeweils angrenzenden Bereichen (6) des Mantelmaterials des Kabels (1) befestigt sind.

3. Kabel mit einer Spiralfeder nach Anspruch 1 oder 2
dadurch gekennzeichnet,
daß die elastische Vorspannung für die Beibehaltung der Spiralform des Kabels bewirkt wird durch
- ein elastisch vorgespanntes Mantelmaterial und/oder
- ein in das Mantelmaterial eingebrachtes oder in das Mantelmaterial eingelegtes elastisch vorgespanntes Füllermaterial und/oder
- eine elastisch vorgespannte Primärisolation der Adern und/oder
- einen elastisch vorgespannten Leiterdraht bzw. elastisch vorgespannte Leiterdrähte.

4. Kabel mit einer Spiralfeder nach Anspruch 3
dadurch gekennzeichnet,
daß das elastisch vorgespannte Material ein Polyamid, eine Polyamid-Mischung oder eine ein Polyamid enthaltende Mischung ist.

5. Kabel mit einer Spiralfeder nach Anspruch 4,
dadurch gekennzeichnet,
daß das Polyamid Nylon ist.

6. Kabel mit einer Spiralfeder nach einem der Ansprüche 3 bis 5,
dadurch gekennzeichnet,
daß die leitenden Adern aus Berrylium oder einer Berrylium-Legierung bestehen.

## Claims

1. A cable surrounded by a spiral spring (3) with closely adjacent windings,
characterized in that said cable (1) is a spiral cable and in that said spiral spring is a metallic spiral spring (3) applied to the cable (1) in the linear state thereof and individually surrounding the spiral windings of the spiral cable in the spiral state thereof.

2. A cable with a spiral spring according to claim 1,
characterized in that the end portions (5) of the metallic spiral spring (3) are attached to the respective adjacent portions (6) of the jacket material of the cable (1) by means of a shrinkable sleeve (7).

3. A cable with a spiral spring according to claim 1 or 2,
characterized in that the elastic prestress for maintaining the spiral shape of the cable is effected by
- an elastically prestressed jacket material and/or
- an elastically prestressed filler material introduced into the jacket material or inserted in the jacket material and/or
- an elastically prestressed primary insulation of the cores and/or
- an elastically prestressed conductor wire or wires, respectively.

4. A cable with a spiral spring according to claim 3,
characterized in that the elastically prestressed material is a polyamide, a polyamide compound or a compound containing a polyamide.

5. A cable with a spiral spring according to claim 4,
characterized in that said polyamide is nylon.

6. A cable with a spiral spring according to any of claims 3 to 5,
characterized in that the conductive cores consist of beryllium or a beryllium alloy.

## Revendications

1. Câble qui est entouré d'un ressort hélicoïdal (3) à spires étroitement appuyées l'une contre l'autre,
caractérisé
par le fait que le câble (1) est un câble hélicoïdal et que le ressort hélicoïdal est un ressort hélicoïdal métallique (3) que l'on applique sur le câble (1) alors qu'il se trouve à l'état linéaire et qui, à l'état hélice du câble hélicoïdal entoure individuellement ses spires d'hélice.

2. Câble avec ressort hélicoïdal selon la revendication 1,
caractérisé
par le fait que les zones d'extrémité (5) du ressort hélicoïdal métallique (3) sont fixées, au moyen d'un manchon rétractable (7), aux zones (6) du matériau de la gaine du câble (1) qui les jouxtent respectivement.

3. Câble avec ressort hélicoïdal selon la revendication 1 ou 2,
caractérisé
par le fait que la précontrainte élastique pour la conservation de la forme hélicoïdale des câbles s'obtient au moyen
- d'un matériau de gaine élastiquement précontraint et/ou
- d'un matériau de charge élastiquement précontraint, rapporté dans le matériau de la gaine ou introduit dans le matériau de la gaine et/ou
- d'un isolant primaire, élastiquement précontraint, des fils conducteurs et/ou
- d'un fil conducteur élastiquement précontraint ou de fils conducteurs élastiquement précontraints.

4. Câble avec ressort hélicoïdal selon la revendication 3,
caractérisé
par le fait que le matériau élastiquement précontraint est un polyamide, un mélange de polyamides ou un mélange contenant un polyamide.

5. Câble avec ressort hélicoïdal selon la revendication 4,
caractérisé
par le fait que le polyamide est le nylon.

6. Câble avec ressort hélicoïdal selon l'une des revendications 3 à 5,
caractérisé
par le fait que les fils conducteurs sont constitués de berrylium ou d'un alliage de berrylium.
